(19) Europäisches Patentamt
European Patent Office
Office européen des brevets

(11) **EP 4 115 434 B1**

(12) **EUROPÄISCHE PATENTSCHRIFT**

(45) Veröffentlichungstag und Bekanntmachung des Hinweises auf die Patenterteilung:
**18.02.2026 Patentblatt 2026/08**

(21) Anmeldenummer: **21820106.9**

(22) Anmeldetag: **02.11.2021**

(51) Internationale Patentklassifikation (IPC):
*H01F 7/08* (2006.01)   *H01F 7/13* (2006.01)
*H01F 7/14* (2006.01)   *G02B 26/08* (2006.01)

(52) Gemeinsame Patentklassifikation (CPC):
**H01F 7/14; G02B 26/085; H01F 7/081; H01F 7/13**

(86) Internationale Anmeldenummer:
**PCT/DE2021/200170**

(87) Internationale Veröffentlichungsnummer:
**WO 2022/089698 (05.05.2022 Gazette 2022/18)**

(54) **ELEKTROMAGNETISCHER AKTUATOR**

ELECTROMAGNETIC ACTUATOR

ACTIONNEUR ÉLECTROMAGNETIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.10.2020 DE 102020213699**

(43) Veröffentlichungstag der Anmeldung:
**11.01.2023 Patentblatt 2023/02**

(73) Patentinhaber: **MICRO-EPSILON Messtechnik GmbH & Co. KG**
**94496 Ortenburg (DE)**

(72) Erfinder: **SCHOPF, Tobias**
**94542 Haarbach (DE)**

(74) Vertreter: **Ullrich & Naumann PartG mbB**
**Schneidmühlstrasse 21**
**69115 Heidelberg (DE)**

(56) Entgegenhaltungen:
**EP-A2- 1 001 512       DE-A1- 102012 220 925**
**DE-A1- 102013 208 768   US-A1- 2017 261 859**

**Beschreibung**

Die Erfindung betrifft einen elektromagnetischen Aktuator mit einem Magnetkreiselemente umfassenden Magnetkreis.

Im Stand der Technik gibt es Aktuatoren, bei denen die mechanische Steifigkeit eines Festkörpergelenks (Flexure) teilweise oder ganz durch eine negative Steifigkeit des Aktuators kompensiert wird. Die negative Steifigkeit wird verursacht durch die Anziehungskraft von permanentmagnetischen Bereichen. Ein elektromagnetischer Aktuator nach dem Stand der Technik ist beispielsweise in der US 2017/261859 A1 offenbart.

Die Flexure- und Aktuatortoleranzen addieren sich dabei auf und müssen im Rahmen des Fertigungsprozesses in gewissen Grenzen gehalten werden.

Die Herstellung einer Flexure mit einer über die Serienstreuung hinweg konstanten Steifigkeit stellt hohe Ansprüche an die mechanischen Toleranzen, da sich die Steifigkeit teilweise sogar kubisch mit den einzelnen Dimensionen der Flexure ändert. Nicht selten ist es daher erforderlich, mechanische Maße im Mikrometerbereich zu tolerieren, um in den erforderlichen Steifigkeitsgrenzen zu bleiben.

Sobald in dem Design eines elektromagnetischen Aktuators Permanentmagneten eingesetzt werden, gibt es zwischen Stator und Rotor Kräfte im unbestromten Zustand. Diese Kräfte äußern sich als "Steifigkeiten" bei Bewegungen zwischen Stator und Rotor. Die Größe dieser sogenannten passiven Aktuatorsteifigkeit ist stark abhängig von der geometrischen Ausprägung des Aktuators, den Toleranzen der Luftspalte, den Magnettoleranzen und dem konkreten magnetischen Widerstand der magnetischen Flussführung. Bedingt durch starke Nichtlinearitäten des magnetischen Feldes ergibt sich bei der passiven Aktuatorsteifigkeit ebenso wie bei der Flexure eine sehr hohe Abhängigkeit von mechanischen Toleranzen.

In einem idealen Systementwurf will man die Steifigkeiten des Aktuators und der Flexure so unter Kontrolle halten, dass ein gezieltes Systemverhalten eingestellt wird. Bei einer sehr niedrigen Systemsteifigkeit ist z.B. ein statischer Betrieb mit einer niedrigen Leistungsaufnahme möglich. Für den dynamischen Betrieb kann es z.B. vorteilhaft sein, die Systemresonanzfrequenz gezielt auf eine bestimmte Frequenz für einen optimalen Regelbetrieb in der Anwendung einzustellen.

Allgemein gilt für die Resonanzfrequenz von Feder-Masse-Systemen:

$$f_{res} = \frac{1}{2\pi}\sqrt{\frac{c_{sys}}{m}}$$

Die Masse "m" ist meistens gegeben, konstant und kann applikationsbedingt eine gewisse Mindestgröße nicht unterschreiten. Somit bleibt zur Einstellung der Systemresonanz nur noch die Systemsteifigkeit übrig, welche sich folgendermaßen aus Flexure- und Aktuator-Steifigkeit zusammensetzt:

$$c_{sys} = c_{flexure} + c_{actuator}$$

Zum Stand der Technik zählen Elemente, welche die Systemsteifigkeit rein mechanisch beeinflussen (z.B. Hebelarmänderung, Federn die sich über die Länge sperren lassen, individuelle mechanische Nachbearbeitung etc.) All diese Lösungen stellen allerdings hohe Anforderungen an Platzbedarf, Komplexität und bedeuten vor allem einen hohen Aufwand in der Fertigung.

Eine relativ weiche Auslegung der Flexure in dem gewünschten Bewegungsfreiheitsgrad bringt den Nachteil mit sich, dass parasitäre Steifigkeiten entsprechend weich sind. Hier zeigt sich der Vorteil bei einer gezielten teilweisen Kompensation der Flexuresteifigkeit durch die Aktuatorsteifigkeit. Das Gelenk kann insgesamt relativ steif ausgelegt werden, und es werden nur die gewünschten Freiheitsgrade durch die entgegenwirkende Kraft der permanent magnetischen Bereiche in der Steifigkeit reduziert.

Aufgabe der Erfindung ist es, den eingangs genannten elektromagnetischen Aktuator derart auszugestalten und weiterzubilden, dass er einfach in der Konstruktion und preiswert in der Herstellung ist. Außerdem soll er sich vom Stand der Technik und somit von wettbewerblichen Produkten unterscheiden.

die Nachteile von sehr engen Toleranzen bei der Herstellung und dem Betrieb der Aktuatoren zu vermeiden und einen einfach herzustellenden, kostengünstigen, in seiner Steifigkeit einstellbaren Aktuator zu ermöglichen.

Gelöst wird die Aufgabe durch einen elektromagnetischen Aktuator gemäß Anspruch 1. Danach üben die Magnetkreiselemente eine anziehende oder abstoßende Kraft aufeinander aus, so dass der Aktuator eine Bewegung ausübt, wobei mindestens eines der Magnetkreiselemente in seiner Position relativ zu einem anderen Magnetkreiselement zur Beeinflussuna der Aktuatorsteifiakeit mit einem Einstellmittel einstellbar ist, wobei das Einstellmittel ein mechanisches Mittel ist, mit dem sie Position dauerhaft oder dynamisch einstellbar ist.

Grundsätzlich kann ein elektromagnetischer Aktuator aus zwei Magnetkreiselementen bestehen. Ein erstes Magnetkreiselement kann in Form einer Spule, die ein Magnetfeld erzeugt, sobald sie von Strom durchflossen wird, ausgeführt sein.

Ein zweites Magnetkreiselement kann in Form eines permanentmagnetischen Bereichs, der entweder aus einem Permanentmagneten oder einem permanent magnetisierten Bereich des Aktuators besteht, ausgeführt sein.

Bereits in dieser Minimalkonfiguration kann - bei Bestromung der Spule - eine Kraft zwischen dem so erzeugten Magnetfeld der Spule und dem Magnetfeld des permanentmagnetischen Bereichs ausgeübt werden. Die Kraft kann über den Stromfluss durch die Spule gesteuert werden. Man könnte die so erzeugte Kraft die "steuerbare Kraft" bezeichnen, die das Wesen des Aktuators ausmacht, nämlich durch Steuern der Kraft eine Bewegung zu erzeugen.

Man könnte von einer "statischen Kraft" sprechen, die für die Steifigkeit des Gesamtsystems steht. Diese statische Kraft wird einerseits durch die Mechanik des Aktuators und andererseits durch die statische magnetische Kraft (erzeugt durch Permanentmagneten) bestimmt. Enthält der Aktuator kein drittes Magnetkreiselement, ist die statische magnetisch Kraft null, da keine magnetische Kraft wirkt, wenn kein Strom fließt.

Erfindungsgemäß ist daher ein drittes Magnetkreiselement (permanentmagnetischer Bereich oder magnetisch leitfähiges Material) wesentlich. Durch das Zusammenwirken von zweitem und drittem Magnetkreiselement wird durch das zwischen den Magnetkreiselementen wirkende statische Magnetfeld eine "statische" Kraft erzeugt und damit eine Steifigkeit, die (aufgrund des nichtlinearen Verlaufs des Magnetfeldes) vom Abstand zwischen dem zweiten und dem dritten Magnetkreiselement abhängt. Damit kann über eine Einstellung des Abstandes zwischen dem zweiten und dritten Magnetkreiselement die Aktuatorsteifigkeit und damit auch die Gesamtsteifigkeit des Systems eingestellt werden.

Ein elektromagnetischer Aktuator besteht prinzipiell aus einem Magnetkreis mit Magnetkreiselementen, die dazu dienen, magnetischen Fluss zu erzeugen, zu leiten oder zu verstärken. Durch das Zusammenwirken der Magnetkreiselemente in einer geeigneten Anordnung wird eine Kraft ausgeübt, die schließlich in einer Bewegung resultiert. Als Magnetkreiselemente können Spulen, permanentmagnetische Bereiche oder magnetisch leitfähige Elemente dienen, die je nach Aktuatortyp und Einsatzzweck in verschiedenster Art und Weise angeordnet werden können. Für die entsprechende Applikation gilt es immer die richtige Konfiguration hinsichtlich Leistungsbedarf, Platzbedarf, gewünschten Bewegungsbereich und sonstigen Spezifikationen zu finden. Eine Gemeinsamkeit all dieser Konfigurationen ist die Kombination aus Spule, Permanentmagnet und magnetisch leitfähigem Material. Das zentrale Element dieser Erfindung ist die Möglichkeit, die Aktuatorsteifigkeit gezielt zu beeinflussen.

Die Erfindung betrifft Aktuatoren mit einem ersten Magnetkreiselement in Form einer Spule, die ein Magnetfeld erzeugt, sobald sie von Strom durchflossen wird.

Weiterhin enthält der Aktuator ein zweites Magnetkreiselement in Form eines permanentmagnetischen Bereichs. Der permanentmagnetische Bereich kann aus einem Permanentmagneten oder einem permanent magnetisierten Bereich des Aktuators bestehen. Der permanentmagnetische Bereich kann sich entweder im Stator ("Hybrid-Reluktanz-Aktuator") oder im Rotor des Aktuators ("Lorenz-Aktuator") befinden.

Das Magnetfeld des ersten Magnetkreiselementes (Spule) ist in seiner Stärke und Richtung über die Stromstärke und -richtung steuerbar. Sobald das erste Magnetkreiselement von einem Strom durchflossen wird, übt es eine durch den Stromfluss steuerbare Kraft auf das zweite Magnetkreiselement aus, die anziehend (bei geeigneter Polung oder Paramagnetismus) oder abstoßend (bei entsprechender Polung oder Diamagnetismus) sein kann.

Weiterhin enthält der Aktuator ein drittes Magnetkreiselement in Form eines weiteren permanentmagnetischen Bereichs oder eines magnetisch leitfähigen Materials. Das dritte Magnetkreiselement dient dazu, das Magnetfeld des ersten oder zweiten Magnetkreiselementes zu formen, zu führen oder zu verstärken. Durch das Zusammenwirken von zweiten und dritten Magnetkreiselement wird durch das statische Magnetfeld dazwischen eine statische Kraft erzeugt, die (aufgrund des nichtlinearen Verlaufs des Magnetfeldes) vom Abstand zwischen dem zweiten und dem dritten Magnetkreiselement abhängt.

Das Gesamtsystem besitzt eine Steifigkeit, die sich aus Aktuatorsteifigkeit (entspricht im Wesentlichen der Steifigkeit des magnetischen Feldes) und der mechanischen Steifigkeit (entspricht im Wesentlichen der Steifigkeit des Flexure) zusammensetzt:

$$c_{sys} = c_{flexure} + c_{actuator}$$

Die mechanische Steifigkeit ist aufgrund der Konstruktion des Aktuators vorgegeben und konstant.

Die Aktuatorsteifigkeit ergibt sich aus dem statischen Magnetfeld, das sich zwischen dem zweiten und dritten Magnetkreiselement ausbildet. Ist das dritte Magnetkreiselement ebenfalls ein permanentmagnetischer Bereich, ergibt sich je nach Polung eine anziehende oder abstoßende Kraft und somit eine negative bzw. positive Steifigkeit. Ist das dritte Magnetkreiselement ein magnetisch leitfähiges, paramagnetisches Material, so ist die resultierende Kraft anziehend.

Die Steifigkeit des Aktuators kann erfindungsgemäß eingestellt werden, indem ein einstellbares Magnetkreiselement vorgesehen ist, dessen Position relativ zur Position eines weiteren Magnetkreiselementes einstellbar ist.

Durch gezielte Justage des einstellbaren Magnetkreiselements wird der Luftspalt im Magnetkreis verändert und aufgrund der Abhängigkeit der Kraft von der Luftspaltgröße auf eine gewünschte Steifigkeit eingestellt. Der Zusammenhang zwischen Kraft $F$ und der Position $z$ des einstellbaren Magnetkreiselements (bzw. Luftspalt) ist nicht linear.

Die erste Ableitung der Kraft nach der Position entspricht der Aktuatorsteifigkeit $c_{actuator}$, die von der Position $z$ abhängig ist:

$$\frac{dF}{dz} = -c(z)_{actuator}$$

Ganz analog gilt dies auch für das Drehmoment M in Abhängigkeit vom Drehwinkel $\varphi$:

$$\frac{dM}{d\varphi} = -c(\varphi)_{actuator}$$

Durch die Nichtlinearität des magnetischen Feldes ist auch die Steifigkeit über die Position des einstellbaren Magnetkreiselements veränderlich.

Je nach Anordnung im Aktuator bzw. dessen Auslegung kann das einstellbare Magnetkreiselement das zweite Magnetkreiselement (permanentmagnetischer Bereich) sein, oder das dritte Magnetkreiselement (permanentmagnetischer Bereich oder magnetisch leitfähiges Material) sein. Das einstellbare Magnetkreiselement ist so ausgestaltet, dass dessen Position relativ zu einem weiteren Magnetkreiselement mit Hilfe geeigneter Einstellmittel eingestellt werden kann.

Als Einstellmittel können elektrische, pneumatische, thermische oder mechanische Mittel dienen, mit denen eine Position dauerhaft oder auch dynamisch einstellbar ist. Besonders einfach in der Konstruktion und daher günstig sowie energiesparend sind mechanische Einstellmittel.

Einfachste mechanische Einstellmittel sind z.B. Unterlegscheiben in geeigneter Dicke.

Eleganter ist die Einstellung mittels einer Führung, in der das Magnetkreiselement geführt und mit einer Klemmvorrichtung fixiert wird, beispielsweise über eine seitliche Klemmschraube.

Als Einstellelement kann auch eine Schraube dienen, mit der die Position des Magnetkreiselementes eingestellt wird.

Eine besonders einfache Einstellung der Position ist möglich, wenn ein Magnetkreiselement selbst das einstellbare Element bildet. Beispielsweise weist das Magnetkreiselement ein Gewinde auf, etwa ein Feingewinde. Dann kann das einstellbare Magnetkreiselement beispielsweise mit einer Mutter, einer Schraube oder ähnlichen, in das Gewinde eingreifende Mittel, in seiner Position eingestellt werden. Besonders vorteilhaft ist, wenn das einstellbare Magnetkreiselement in seiner Halterung, beispielsweise dem Spulenträger, der ein entsprechendes Gegengewinde besitzt, drehbar geführt und somit einstellbar ist.

Die Einstellung der Aktuatorsteifigkeit kann bei der Herstellung des Aktuators auf einen vorgegebenen Wert eingestellt werden. Weiterhin ist es denkbar, die Aktuatorsteifigkeit erst bei der Montage des Aktuators in der jeweiligen Anwendung einzustellen. Dies kann dann erforderlich sein, wenn in der Anwendung durch zusätzliche Massen, beispielsweise einem Spiegel, der auf einem ein- oder zweiachsigen Aktuator montiert wird, die Resonanzfrequenz und des Gesamtsystems sich ändert und dadurch die Steifigkeit erneut eingestellt werden muss.

Das einstellbare Magnetkreiselement könnte auch durch eine elektromechanische Einstellung in seiner Position eingestellt werden. Damit wäre eine Einstellung auch automatisierbar möglich, beispielsweise durch einen automatischen Abgleich bei der Herstellung oder in der Anwendung selbst. Die Einstellung könnte dann auch im Betrieb variabel durchgeführt werden. Man könnte dann die Aktuatorsteifigkeit des Systems und damit dessen Resonanzfrequenz dynamisch anpassen, um beispielsweise die Leistungsaufnahme zu optimieren, oder um resonant scanning zu betreiben. Dabei bedeutet resonant scanning, dass die Aktuatorsteifigkeit so gesteuert wird, dass die Resonanzfrequenz des Aktuators der Grundfrequenz der erwünschten Bewegung entspricht.

Besonders vorteilhaft ist die Einstellbarkeit bei Aktuatoren, die eine Bewegung in zwei oder mehr Achsen ausführen. Derartige Aktuatoren können beispielsweise eine Kippbewegung um eine Achse oder auch um zwei, unter 90° zueinander versetze Achsen ausführen. Bei derartigen Aktuatoren muss häufig eine Nulllage eingestellt werden. Ohne Einstellbarkeit müssten alle mechanischen Elemente und insbesondere auch die magnetischen Magnetkreiselemente mit geringsten Toleranzen gefertigt und angeordnet werden. Wesentlich einfacher und kostengünstiger ist es, wenn die Einstellung bei oder nach der Herstellung des Aktuators durch eine einfache Einstellung der Position mindestens eines Magnetkreiselementes durchgeführt wird. Damit werden Fertigungstoleranzen der Mechanik (insbesondere des Flexure) und des Aktuators (magnetische Steifigkeit) durch den Abgleichvorgang ausgeglichen. Somit sind die Eigenresonanzen des Gesamtsystems auch über Fertigungstoleranzen gezielt einstellbar und somit reproduzierbar. Damit ergibt sich eine reproduzierbare Leistungsaufnahme des Aktuators und dadurch ein konstant verwendbares Reglerdesign.

Derartige Aktuatoren dienen beispielsweise dazu, Licht in bestimmte Raumrichtungen zu lenken ("Fast Steering Mirror"). Dazu ist auf dem beweglichen Element des Aktuators ein Spiegel montiert. Besonders günstig ist es, wenn das bewegliche Element selbst durch eine geeignete Verspiegelung als Spiegel dient, da dann die bewegten Massen reduziert sind und eine hohe Dynamik erreicht wird.

Die Vorteile des erfindungsgemäßen Aktuators sind:

- Gezielte Einstellung der Systemsteifigkeit für die jeweilige Applikation.
- Eigenresonanz des Systems über Fertigungschargen hinaus reproduzierbar einstellbar.
- Durch die über die Fertigungstoleranzen reproduzierbar einstellbare Eigenresonanz ergibt sich eine reproduzierbare Leistungsaufnahme und ein konstant verwendbares Reglerdesign.
- Fertigungstoleranzen in der Flexure und im Aktuator werden zum großen Teil durch den Abgleichvorgang kurz geschlossen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen

Fig. 1      in schematischer Ansicht ein Ausführungsbeispiel eines erfindungsgemäßen Aktuators,

Fig. 2      in schematischer Ansicht ein weiteres Ausführungsbeispiel eines erfindungsgemäßen Aktuators,

Fig. 3      in schematischer Ansicht ein weiteres Ausführungsbeispiel eines erfindungsgemäßen Aktuators, ähnlich wie in Figur 1,

Fig. 4      in schematischer Ansicht ein weiteres Ausführungsbeispiel eines erfindungsgemäßen Aktuators, mit einer Funktion ähnlich wie in Figur 1,

Fig. 5      in schematischer Ansicht ein weiteres Ausführungsbeispiel eines erfindungsgemäßen Aktuators, ähnlich wie in Figur 4,

Fig. 6      in schematischer Ansicht ein weiteres Ausführungsbeispiel eines erfindungsgemäßen Aktuators, in Weiterbildung zu Figur 5,

Fig. 7      ein Diagramm mit dem beispielshaften Verlauf der Kraft zwischen Permanentmagnet und Aktuatorkern in Abhängigkeit von dem Abstand zwischen Permanentmagnet und Aktuatorkern.

Fig. 8      in einem Diagramm die passive Aktuatorsteifigkeit als erste Ableitung über den Abstand zwischen Kern und Magnet,

Fig. 9      in einer schematischen Ansicht ein mechatronisches System mit erfindungsgemäßen Aktuatoren,

Fig. 10      in schematischer Ansicht das System aus Figur 9 im verkipptem Zustand,

Fig. 11      in schematischer Ansicht das System aus Figur 9 mit einem permanentmagnetischen Bereich, der sich im Stator im Fußbereich des Flexure befindet,

Fig. 12      in einem Diagramm die typischen Drehmomentverläufe des Aktuators und der Flexure in Abhängigkeit der Verkippung des Systems aus den Figuren 9 und 10,

Fig. 13      in einem Diagramm die Kompensation der Aktuator- und Flexuresteifigkeit zu einer Gesamtsystemsteifigkeit,

Fig. 14      in einer schematischen Ansicht ein um ein weiteres Aktuatorenpaar ergänztes System, und

Fig. 15      in einer schematischen Ansicht, geschnitten, das System aus Figur 14.

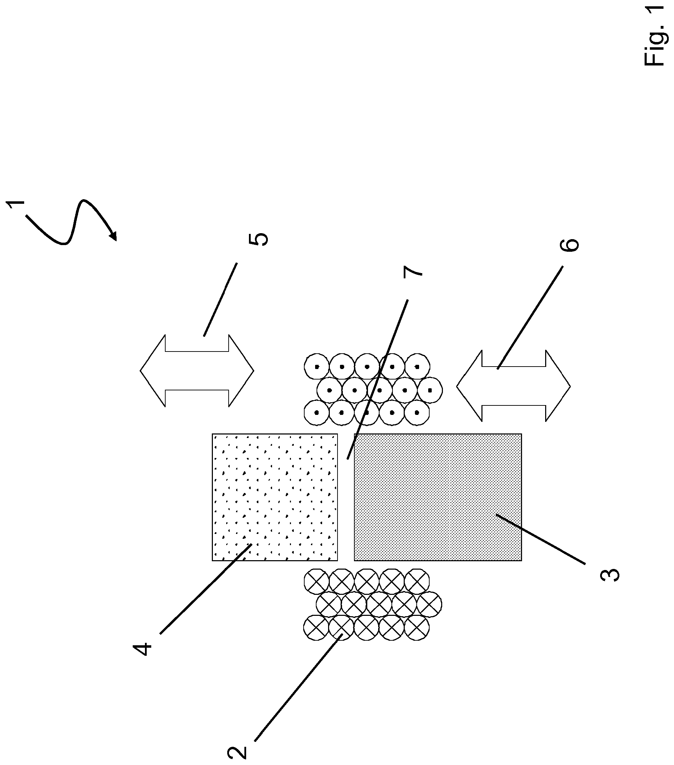

Fig. 1 zeigt einen elektromagnetischen Aktuator 1 bestehend aus Spule 2, Kern 3 und als bewegten Teil einen permanentmagnetischen Bereich 4, in diesem Beispiel ein Permanentmagnet. Zwischen dem Permanentmagneten 4 und dem Aktuatorkern 3 besteht eine Anziehungskraft. Durch die Bestromung der Spule 2 wird diese Anziehungskraft je nach Bestromungsrichtung verstärkt bzw. abgeschwächt. Abhängig von der mechanischen Aufhängung des Permanentmagneten 4 resultiert daraus eine Bewegungsänderung 5. Der Aktuatorkern ist in seiner Position bezüglich des Permamentmagneten einstellbar gestaltet. Die Position wird in Achsrichtung 6 eingestellt. Durch den variablen Spalt 7 zwischen Magnet ergibt sich eine entsprechende variable Steifigkeit des Aktuators.

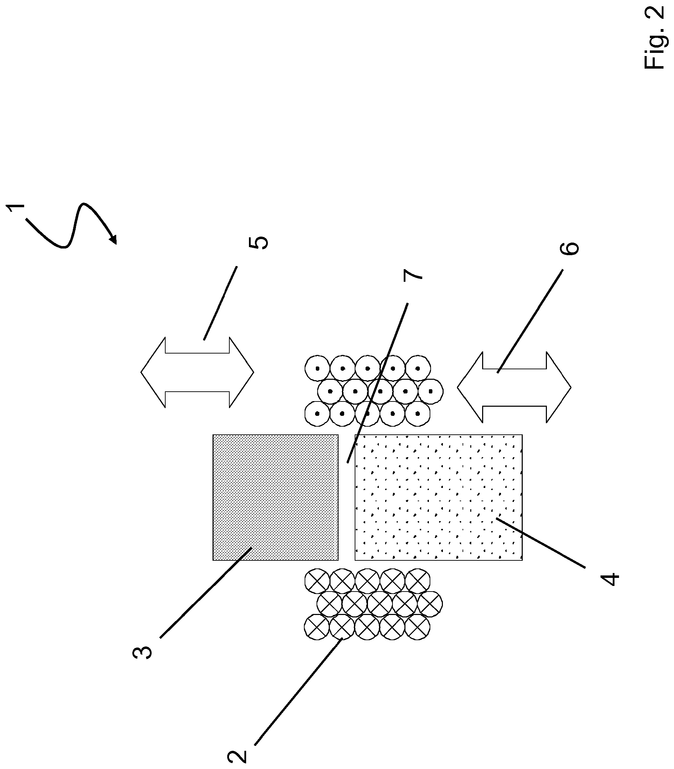

In Fig. 2 ist ein Aktuator 1 ähnlich wie in Fig. 1 dargestellt, mit dem Unterschied, dass nun der Kern 3 den beweglichen Teil des Aktuators darstellt und die Position des Magneten 4 variabel ist und zur Steifigkeitseinstellung genutzt wird.

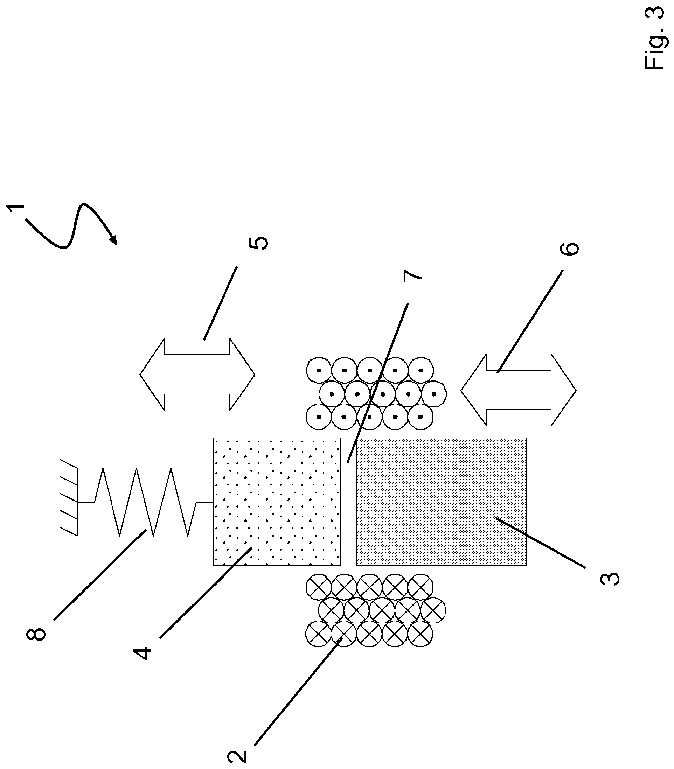

In Fig. 3 ist ein Aktuator wie in Fig. 1 dargestellt mit der Ergänzung einer mechanischen Aufhängung, die als Festkörpergelenk dient und als Feder 8 angedeutet ist. Die mechanische Steifigkeit des Festkörpergelenks wird gezielt teilweise oder komplett (je nach Applikation und gewünschter Resonanzfrequenz) durch die Aktuator-steifigkeit kompensiert.

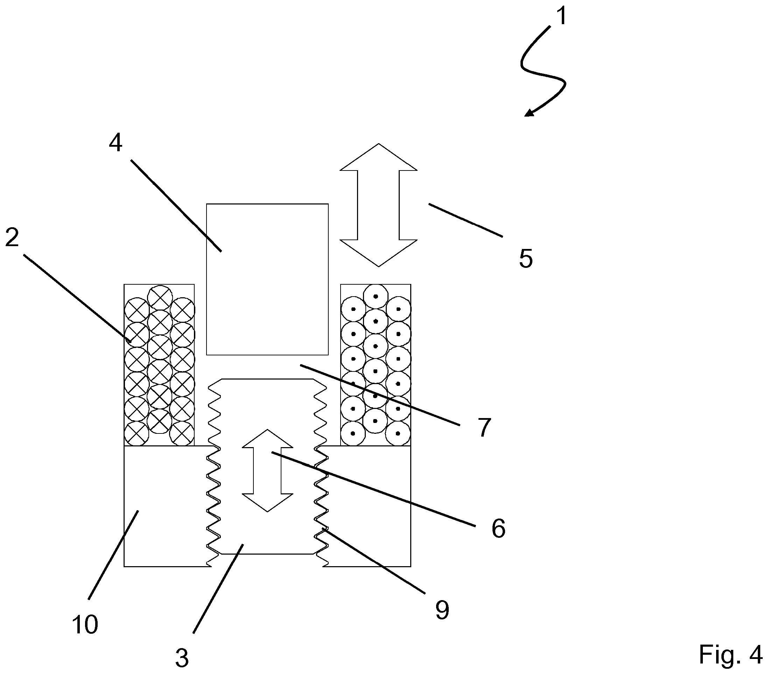

Fig. 4 zeigt einen Aktuator welcher vom Prinzip her wie der Aktuator aus Fig. 1 funktioniert. Der Aktuatorkern 3 wurde hier konkret als Zylinder mit einem Außengewinde 9 realisiert, der sich in einem Spulenträger 10 mit entsprechendem Innengewinde befindet. Durch das Gewinde 9 lässt sich der Abstand 7 des Kerns 3 zu dem Permanentmagneten 4 sehr fein justieren.

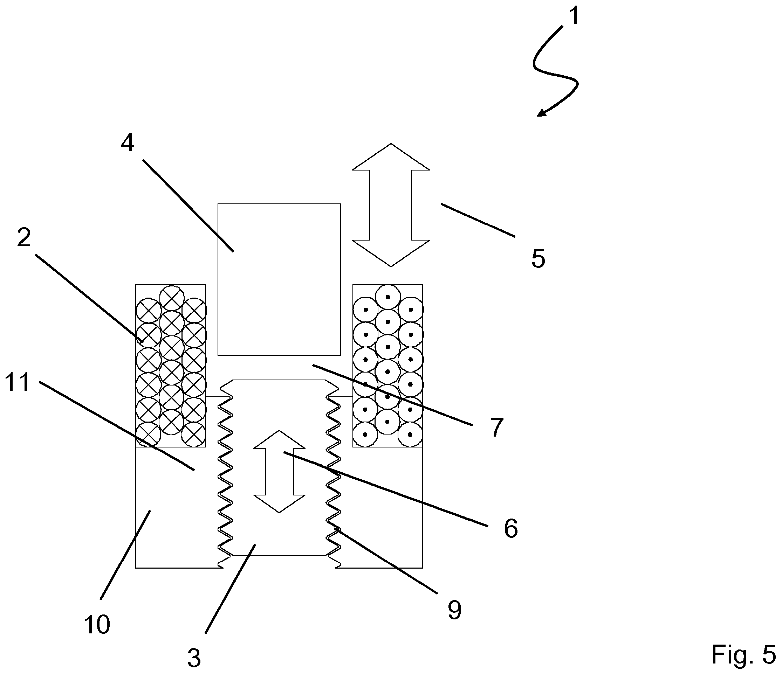

Fig. 5 zeigt einen Aktuator wie in Fig. 4 mit dem Unterschied, dass der Spulenträger 10 in welchem der Aktuatorkern 3 justiert wird, genau wie der Kern 3 aus einem magnetisch leifähigen Material 11 besteht. Der Spulenträger 10 aus magnetisch leitfähigen Material dient dazu, den magnetischen Widerstand im Magnetkreis zu verringern und dementsprechend den magnetischen Fluss zu erhöhen. Bei gleicher Aktuatorleistung ergibt sich damit eine größere Aktuatorkraft.

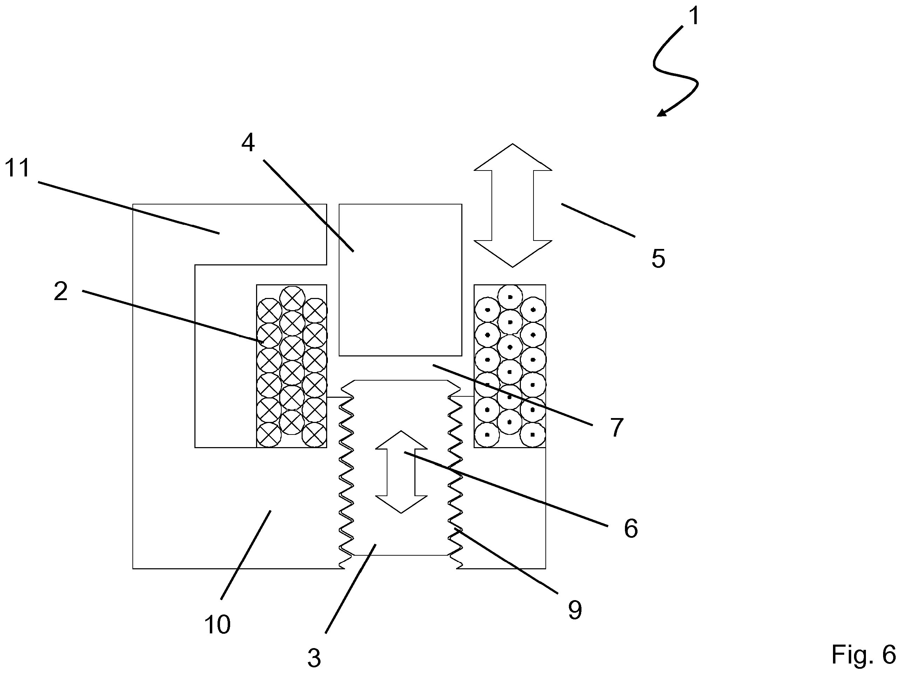

In Fig.6 ist im Vergleich zu Fig. 5 eine weiterführende Möglichkeit dargestellt, den magnetischen Widerstand im Aktuator 1 zu verringern, indem mittels magnetisch leifähigem Material 11 der magnetische Fluss an der Spule vorbei zurück Richtung bewegten Teil des Aktuators geführt wird.

Prinzipiell gibt es diverse Aktuatorkonfigurationen welche über die gezeigten Beispiele hinausgehen. Für die entsprechende Applikation gilt es immer die richtige Konfiguration hinsichtlich Leistungsbedarf, Platzbedarf, Sonstige Spezifikationen und gewünschten Bewegungsbereich zu finden. Eine Gemeinsamkeit all dieser Konfigurationen ist die Kombination aus Spule, Permanentmagnet und magnetisch leitfähigem Material. Das zentrale Element dieser Erfindung ist ein einstellbares Element in dem Aktuator um die Aktuatorsteifigkeit gezielt zu beeinflussen.

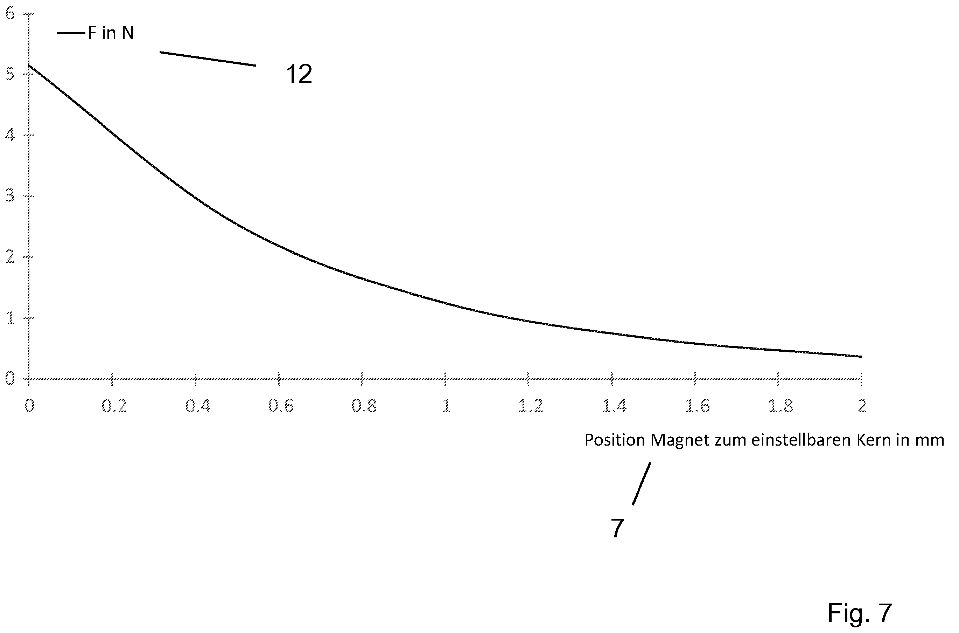

Das Diagramm in Fig. 7 zeigt einen beispielhaften Verlauf der Kraft 12 zwischen Permanentmagnet 4 und Aktuatorkern 3 in Abhängigkeit von dem Abstand 7 zwischen Permantentmagnet und Aktuatorkern.

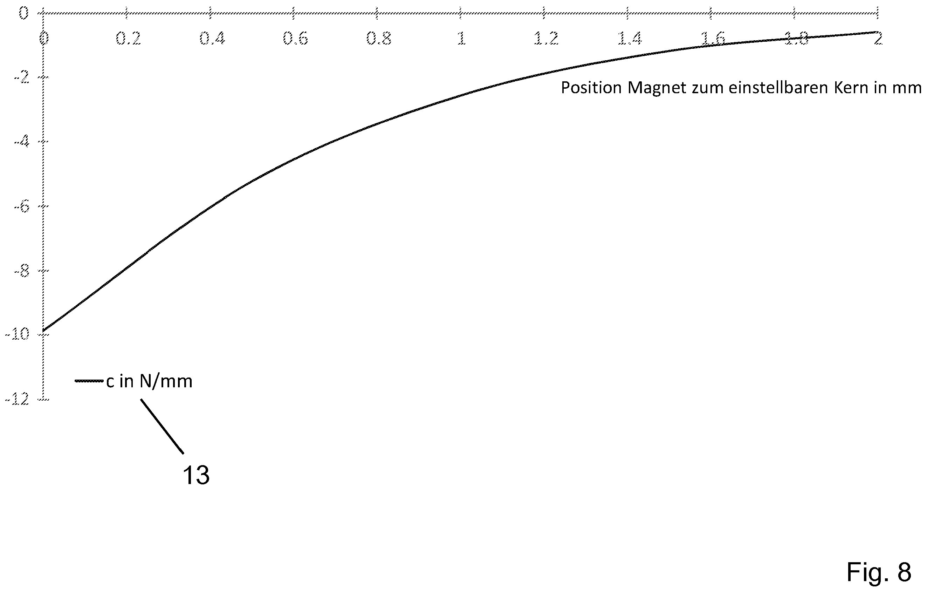

Bildet man die erste Ableitung über den Abstand zwischen Kern und Magnet, so erhält man die passive (Spulen unbestromt) Aktuatorsteifigkeit 13 welche in Fig. 8 dargestellt ist.

$$c = \frac{dF}{dx}$$

*c*:    Aktuatorsteifigkeit
*x*:    Position Kern zu Magnet
*F*:    Aktuatorkraft

Das negative Vorzeichen verdeutlicht dabei, dass bei Annäherung die Kraft größer wird. In dem Kurvenverlauf erkennt man deutlich die mögliche Variation der Steifigkeit in Abhängigkeit der Kernposition.

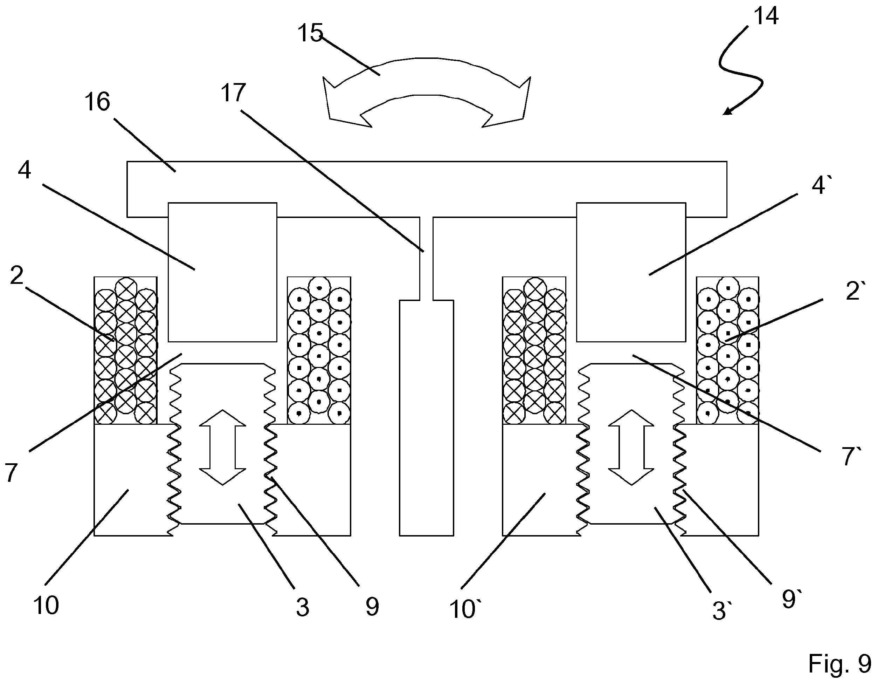

Fig. 9 zeigt einen konkretes mechatronisches System 14 welches die Verkippung 15 des bewegten Elements 16 bewirkt. Die mechanische Aufhängung ist beispielhaft als einfaches Stab-Festkörpergelenk 17 realisiert. Das Aktuatorprinzip wurde aus Fig. 4 übernommen und für die beiden Seiten symmetrisch appliziert. Um eine Kippbewegung zu erhalten werden die beiden Spulen 2, 2' jeweils mit unterschiedlichem Vorzeichen bestromt. Die Spulen 2, 2' sind gleichsinnig gewickelt, was durch die Kreuze 18 und Punkte 19 angedeutet wird. Der jeweilige Abstand 7, 7' zwischen den Magnetkreiselementen 3, 3' und 4, 4'wird mittels eines Feingewindes 9, 9' so eingestellt, dass die Gesamtsteifigkeit des Systems für die jeweilige Anwendung optimiert wird.

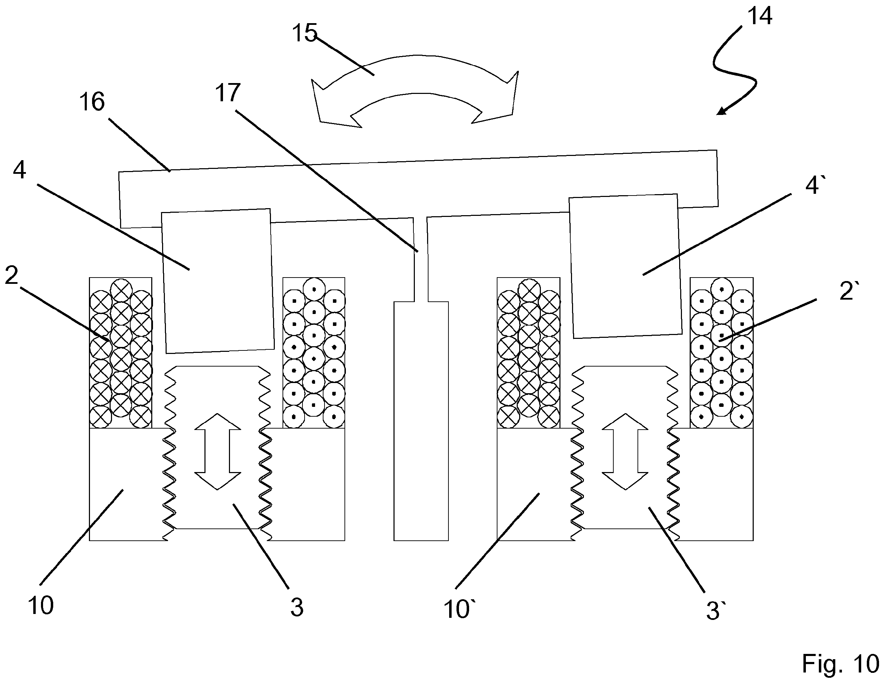

Fig. 10 zeigt das mechatronische System aus Fig. 9 im verkippten Zustand.

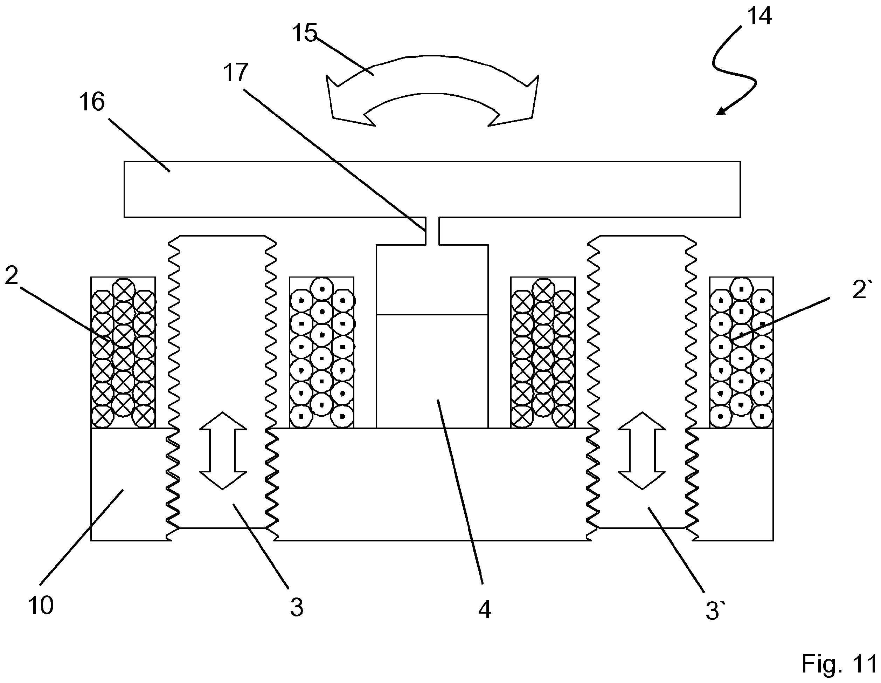

Fig. 11 zeigt das mechatronische System 14 aus Fig. 9 mit einem permanentmagnetischen Bereich 4, der sich im Stator im Fußbereich des Flexure 17 befindet. Der Magnetkreis schließt sich dabei, ausgehend vom permanentmagnetischen Bereich, im Beispiel ein Permanentmagnet 4, über das Flexure 17 und das bewegliche Element 16 hin zum einstellbaren Aktuatorkern 3.

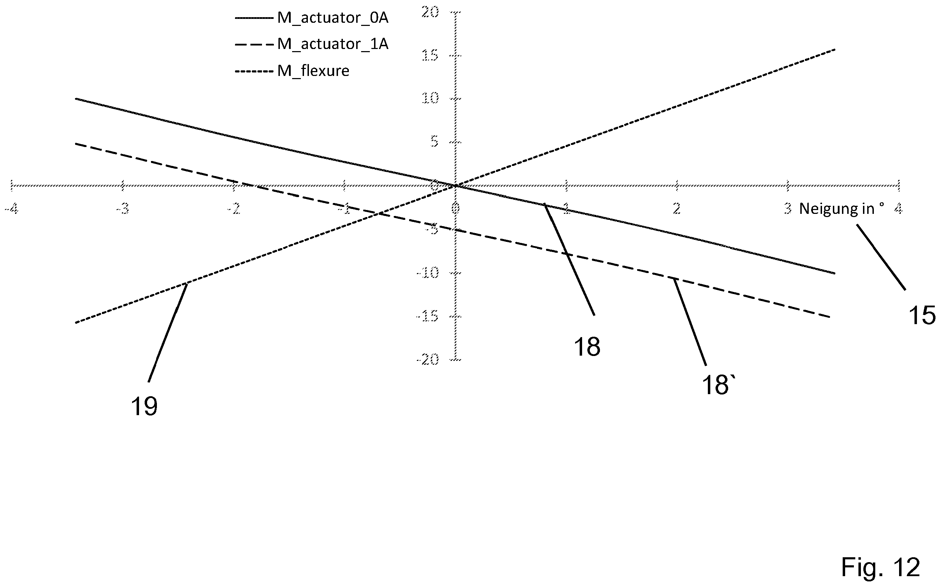

Fig. 12 zeigt die typischen Drehmomentverläufe des Aktuators ("M_actuator_0A") 18 und der Flexure ("M_flexure") 19 in Abhängigkeit der Verkippung 15 des Systems aus Fig. 9 u. 10. Auffällig dabei ist das unterschiedliche Vorzeichen zwischen Aktuator und Flexure und damit entsprechend der Vorzeichenunterschied in der Steifigkeit. Die Kurve "M_actuator_1A" 18' zeigt das Drehmoment bei einer Bestromung der Aktuatorspulen mit 1 Ampere Stromstärke.

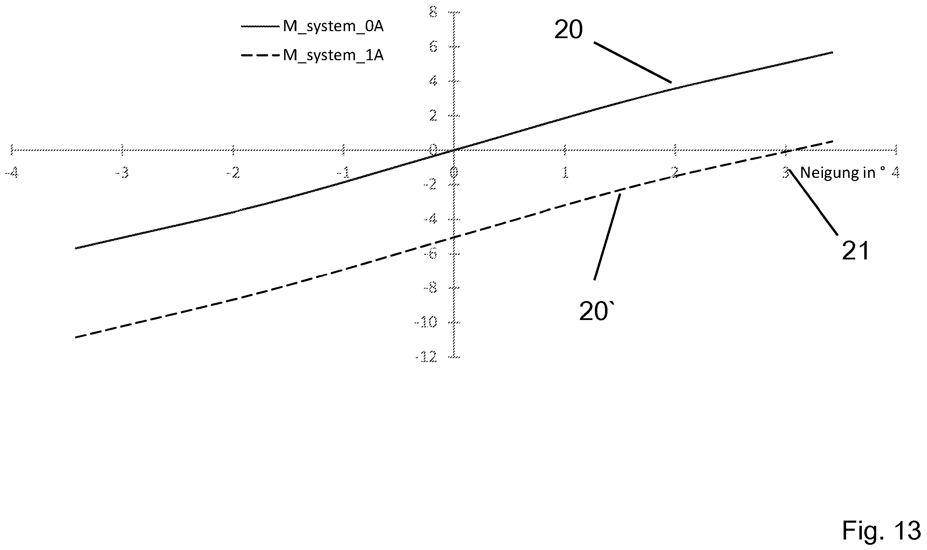

Im Diagramm Fig. 13 kompensieren sich die Aktuator- und Flexuresteifigkeit zu einer Gesamtsystemsteifigkeit ("M_system_0A") 20 gemäß der folgenden Formel:

$$M_{system\_0A} = M_{actuator\_0A} + M_{flexure}$$

Des Weiteren erkennt man in dem Diagramm, dass für eine Auslenkung von ca. 3° ein Spulenstrom von ca. 1 A erforderlich ist, was durch den Nulldurchgang 21 bei 3 ° der gestrichelten Kurve "M_system_1A" 20' angezeigt wird.

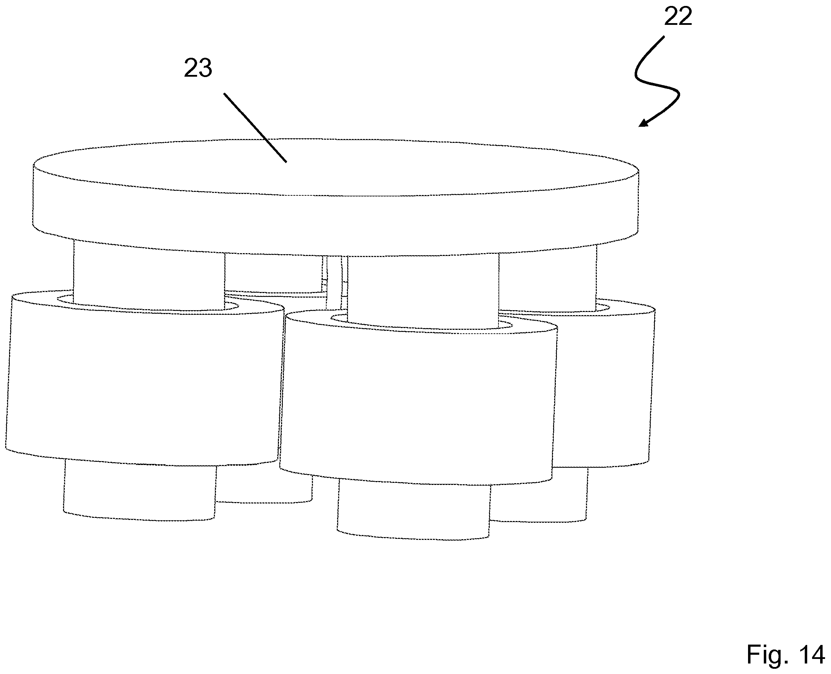

Fig. 14 zeigt ein um ein weiteres 90° gedrehtes Aktuatorpaar erweitertes System 22 welches Verkippungen um zwei Raumachsen ermöglicht. Das System besitzt auf der Oberseite einen verspiegelten Bereich 23. Der verspiegelte Bereich 23 kann entweder ein Spiegel sein, der auf dem beweglichen Element montiert ist, oder durch eine entsprechende Verspiegelung des beweglichen Elementes selbst hergestellt sein.

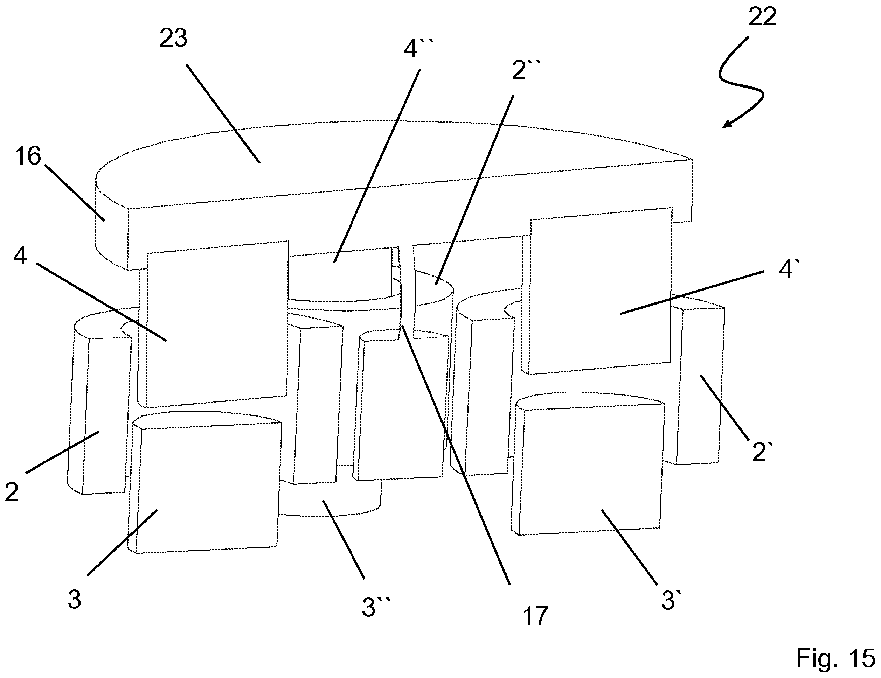

Im Schnittbild Fig.15 erkennt man deutlich wieder den bewegten Teil 17 mit den Permanentmagneten 4, 4', 4", (Magnet 4''' nicht gezeigt), die mechanische Aufhängung in Form eines Festkörpergelenks 17 und die Spulenkerne 3, 3', 3" (Kern 3''' nicht gezeigt), welche in Ihrer Position zur Einstellung der Steifigkeit variiert werden können.

Hinsichtlich weiterer vorteilhafter Ausgestaltungen der erfindungsgemäßen Lehre wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Lehre lediglich zur Erörterung der beanspruchten Lehre dienen, diese jedoch nicht auf die Ausführungsbeispiele einschränken.

Bezugszeichenliste

1        Aktuator

| 2, 2' | Spule |
|---|---|
| 3, 3', 3" | Aktuatorkern |
| 4, 4', 4" | Permanentmagneten |
| 5 | Bewegungsänderung |
| 6 | Achsrichtung |
| 7, 7' | variabler Spalt |
| 8 | Feder |
| 9, 9' | Außengewinde, Feingewinde |
| 10 | Spulenträger |
| 11 | magnetisch leitfähiges Material |
| 12 | Verlauf der Kraft |
| 13 | Aktuatorsteifigkeit |
| 14 | mechatronisches System |
| 15 | Verkippung |
| 16 | bewegtes Element |
| 17 | Stab-Festkörpergelenk, Flexure |
| 18, 18' | Drehmomentverläufe des Aktuators ("M_actuator_0A") |
| 19 | Flexure ("M_flexure") |
| 20, 20' | Gesamtsystemsteifigkeit ("M_system_0A") |
| 21 | Nulldurchgang |
| 22 | erweitertes System |
| 23 | verspiegelter Bereich |

**Patentansprüche**

1. Elektromagnetischer Aktuator (1) mit einem drei Magnetkreiselemente (2, 2', 10, 10', 11, 3, 3', 4, 4') umfassenden Magnetkreis und mit einem Einstellmittel, wobei die Magnetkreiselemente eine anziehende oder abstoßende Kraft aufeinander ausüben, so dass der Aktuator eine Bewegung ausübt, wobei mindestens eines der Magnetkreiselemente in seiner Position relativ zu einem anderen Magnetkreiselement zur Beeinflussung der Aktuatorsteifigkeit mit dem Einstellmittel einstellbar ist,
wobei das Einstellmittel ein mechanisches Mittel ist, mit dem die Position dauerhaft oder dynamisch einstellbar ist.

2. Aktuator nach Anspruch 1, **dadurch gekennzeichnet, dass** die Magnetkreiselemente eine Kombination aus Spule (2, 2'), permanentmagnetischem Bereich (4, 4') und/oder magnetisch leitfähigem Material (10, 10', 11, 3, 3') sind.

3. Aktuator nach Anspruch 1 oder 2, **dadurch gekennzeichnet, dass** das erste Magnetkreiselement als Spule ausgeführt ist und über die Stromstärke und Stromrichtung steuerbar ist, derart, dass es sobald es von Strom durchflossen wird, eine durch den Stromfluss steuerbare anziehende oder abstoßende Kraft auf das als permanentmagnetischer Bereich ausgeführte zweite Magnetkreiselement ausübt.

4. Aktuator nach einem der Ansprüche 1 bis 3, **dadurch gekennzeichnet, dass** das dritte Magnetkreiselement als permanentmagnetischer Bereich oder als magnetisch leitfähiges Material ausgeführt ist, wobei das dritte Magnetkreiselement dazu dient, das Magnetfeld des ersten und/oder zweiten Magnetkreiselements zu formen, zu führen und/oder zu verstärken.

5. Aktuator nach einem der Ansprüche 1 bis 4, **dadurch gekennzeichnet, dass** durch das Zusammenwirken von zweitem und drittem Magnetkreiselement aufgrund des dazwischen wirkenden statischen Magnetfeldes eine statische Kraft erzeugt wird, die abhängig ist vom Abstand zwischen den beiden Magnetkreiselementen.

6. Aktuator nach einem der Ansprüche 1 bis 5, **dadurch gekennzeichnet, dass** sich ein permanentmagnetischer Bereich im bewegten Teil des Aktuators befindet und ein Aktuatorkern (3, 3') im Abstand zu dem permanentmagnetischen Bereich verändert wird.

7. Aktuator nach einem der Ansprüche 1 bis 6, **dadurch gekennzeichnet, dass** sich ein magnetisch leitfähiges Material im bewegten Teil des Aktuators befindet und ein permanentmagnetischer Bereich im Abstand zu dem bewegten Teil angeordnet ist.

8. Aktuator nach einem der Ansprüche 1 bis 7, **dadurch gekennzeichnet, dass** der permanentmagnetische Bereich ein Permanentmagnet oder ein permanent magnetisierter Bereich ist.

9. Aktuator nach einem der Ansprüche 1 bis 8, **dadurch gekennzeichnet**, die Einstellung der Position eines der Magnetkreiselemente durch ein Gewinde (9, 9'), und/oder durch ein elektromechanisches Mittel erfolgt.

10. Aktuator nach einem der Ansprüche 1 bis 9, **dadurch gekennzeichnet, dass** die Anordnung der Magnetkreiselemente spiegelsymmetrisch dupliziert ist, um eine Kippbewegung auszuführen.

11. Aktuator nach Anspruch 10, **dadurch gekennzeichnet, dass** die Anordnung der Magnetkreiselemente um 90° rotiert dupliziert ist, wodurch eine zweidimensionale Kippbewegung aktuiert werden kann.

**Claims**

1. An electromagnetic actuator (1) having a magnetic circuit comprising three magnetic circuit elements (2, 2', 10, 10', 11, 3, 3', 4, 4') and having an adjustment means, wherein the magnetic circuit elements exert an attracting or repelling force on one another so that the actuator effects a movement, wherein the position of at least one of the magnetic circuit elements relative to another magnetic circuit element is adjustable via the adjustment means in order to influence the actuator stiffness,

wherein the adjustment means is a mechanical means via which the position is continually or dynamically adjustable.

2. The actuator according to claim 1, **characterized in that** the magnetic circuit elements are a combination of a coil (2, 2'), a permanent magnetic area (4, 4'), and/or a magnetically conductive material (10, 10', 11, 3, 3').

3. The actuator according to claim 1 or 2, **characterized in that** the first magnetic circuit element is designed as a coil, and is controllable via the current intensity and current direction in such a way that as soon as current flows through it, it exerts an attracting or repelling force, controllable via the current flow, on the second magnetic circuit element, which is designed as a permanent magnetic area.

4. The actuator according to one of claims 1 through 3, **characterized in that** the third magnetic circuit element is designed as a permanent magnetic area or as a magnetically conductive material, wherein the third magnetic circuit element is used to form, conduct, and/or intensify the magnetic field of the first and/or second magnetic circuit element(s).

5. The actuator according to one of claims 1 through 4, **characterized in that** due to the interaction of the second and third magnetic circuit elements as a result of the static magnetic field acting between them, a static force is generated that is a function of the distance between the two magnetic circuit elements.

6. The actuator according to one of claims 1 through 5, **characterized in that** a permanent magnetic area is present in the moving part of the actuator, and an actuator core (3, 3') is changed at a distance from the permanent magnetic area.

7. The actuator according to one of claims 1 through 6, **characterized in that** a magnetically conductive material is present in the moving part of the actuator, and a permanent magnetic area is situated at a distance from the moving part.

8. The actuator according to one of claims 1 through 7, **characterized in that** the permanent magnetic area is a permanent magnet or a permanently magnetized area.

9. The actuator according to one of claims 1 through 8, **characterized in that** the adjustment of the position of one of the magnetic circuit elements takes place by means of a thread (9, 9') and/or an electromechanical means.

10. The actuator according to one of claims 1 through 9, **characterized in that** the arrangement of the magnetic circuit elements is duplicated in a mirror-symmetrical manner in order to perform a tilting movement.

11. The actuator according to claim 10, **characterized in that** the arrangement of the magnetic circuit elements is duplicated with a rotation by 90°, as a result of which a two-dimensional tilting movement can be actuated.

**Revendications**

1. Actionneur électromagnétique (1) comprenant un circuit magnétique comportant trois éléments gyroscopiques (2, 2', 10, 10', 11, 3, 3', 4, 4') et un moyen de réglage, les éléments gyroscopiques magnétiques exerçant une force d'attraction ou de répulsion les uns sur les autres, de sorte que l'actionneur effectue un mouvement, au moins l'un des éléments gyroscopiques magnétiques pouvant être réglé dans sa position par rapport à un autre élément gyroscopique magnétique à l'aide du moyen de réglage afin d'influencer la rigidité de l'actionneur,

le moyen de réglage étant un moyen mécanique permettant de régler la position de manière permanente ou dynamique.

2. Actionneur selon la revendication 1, **caractérisé en ce que** les éléments magnétiques circulaires sont une combinaison d'une bobine (2, 2'), d'une zone magnétique permanente (4, 4') et/ou d'un matériau magnétiquement conducteur (10, 10', 11, 3, 3').

3. Actionneur selon la revendication 1 ou 2, **caractérisé en ce que** le premier élément magnétique est conçu comme une bobine et peut être commandé par l'intensité et le sens du courant, de telle sorte que, dès qu'il est traversé par le courant, il exerce une force d'attraction ou de répulsion, commandable par le flux de courant, sur le deuxième élément magnétique conçu comme une zone magnétique permanente.

4. Actionneur selon l'une des revendications 1 à 3, **caractérisé en ce que** le troisième élément magnétique est conçu comme une zone magnétique permanente ou comme un matériau magnétiquement conducteur, le troisième élément magnétique servant à former, guider et/ou renforcer le champ magnétique du premier et/ou du deuxième élément magnétique.

**5.** Actionneur selon l'une des revendications 1 à 4, **caractérisé en ce que** l'interaction entre le deuxième et le troisième élément gyroscopique magnétique génère, en raison du champ magnétique statique agissant entre eux, une force statique qui dépend de la distance entre les deux éléments gyroscopiques magnétiques.

**6.** Actionneur selon l'une des revendications 1 à 5, **caractérisé en ce qu'**une zone magnétique permanente se trouve dans la partie mobile de l'actionneur et qu'un noyau d'actionneur (3, 3') est modifié à distance de la zone magnétique permanente.

**7.** Actionneur selon l'une des revendications 1 à 6, **caractérisé en ce qu'**un matériau magnétiquement conducteur se trouve dans la partie mobile de l'actionneur et qu'une zone magnétique permanente est agencée à distance de la partie mobile.

**8.** Actionneur selon l'une des revendications 1 à 7, **caractérisé en ce que** la zone magnétique permanente est un aimant permanent ou une zone magnétisée de manière permanente.

**9.** Actionneur selon l'une des revendications 1 à 8, **caractérisé en ce que** le réglage de la position de l'un des éléments gyroscopiques magnétiques s'effectue au moyen d'un filetage (9, 9') et/ou d'un moyen électromécanique.

**10.** Actionneur selon l'une des revendications 1 à 9, **caractérisé en ce que** l'agencement des éléments magnétiques gyroscopiques est dupliqué de manière symétrique afin d'effectuer un mouvement de basculement.

**11.** Actionneur selon la revendication 10, **caractérisé en ce que** l'agencement des éléments gyroscopiques magnétiques est dupliqué avec une rotation de 90°, ce qui permet d'activer un mouvement de basculement bidimensionnel.

Fig. 1

Fig. 2

Fig. 3

EP 4 115 434 B1

Fig. 4

Fig. 5

Fig. 6

EP 4 115 434 B1

Fig. 7

Position Magnet zum einstellbaren Kern in mm

c in N/mm

13

Fig. 8

EP 4 115 434 B1

Fig. 9

Fig. 10

EP 4 115 434 B1

Fig. 11

EP 4 115 434 B1

Fig. 12

EP 4 115 434 B1

Fig. 13

EP 4 115 434 B1

Fig. 14

Fig. 15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017261859 A1